# EUROPEAN PATENT SPECIFICATION

(11) **EP 0 475 698 B1**
(45) Date of publication and mention of the grant of the patent: **12.03.1997**
(21) Application number: 91308202.0
(22) Date of filing: 09.09.1991
(51) Int. Cl.: H04Q 7/38, H02P 7/00

(54) **Method for managing radio communication resources**
Verwaltungsverfahren für Funkkommunikationsbetriebsmittel
Méthode de gestion des ressources de radio-communication

(43) Date of publication of application: 18.03.1992
(73) Proprietor: MOTOROLA, INC., Schaumburg, IL 60196 (US)
(72) Inventor: Herold, Brenda K., Carol Stream, Illinois 60188 (US); Ioratti, Christine K., Union, Illinois 60108 (US); Levine, Stephen N., Itasca, Illinois 60143 (US); Dominiak, Douglas, Chicago, Illinois 60652 (US); Flanders, Mary Beth, Wood Dale, Illinois 60191 (US)
(74) Representative: Lupton, Frederick

(56) References cited:
- EP-A- 0 339 740
- EP-A- 0 415 898
- FR-A- 2 605 820
- US-A- 4 612 415
- FUNK-TECHNIK vol. 41, no. 4, April 1986, HEIDELBERG DE HALAMEK ET AL. 'Zellgrenzdetektion mit relativer Entfernungsmessung im Netz C'

## Description

### Technical Field

The present invention relates generally to communication systems. More particularly, this invention relates to the management and allocation of communication system resources amongst a plurality of units requesting said resources. Specifically, however, this invention relates to methods for reducing levels of contention within a communication system, thereby reducing the likelihood that more than one communication channel will be assigned to a single requesting unit.

### Background Of The Invention

Radiotelephone service has been in use for some time and has traditionally been characterized by a central site transmitting with high power to a limited number of mobile units in a large geographic area. Mobile transmissions, due to their lower power, are received by a network of receivers located remotely from the central site and then returned to the central site for processing.

In yet another configuration, the coverage area is divided into contiguous smaller zones of coverage (cells) using lower power transmitters and receivers at the central site. One such system is described in U.S. Pat. No 3,906,166 assigned to the assignee of the present invention. The limited coverage area enables the channel frequencies used in one cell to be reused in another cell geographically separated according to specified plans. One such plan is disclosed in U.S. Pat No. 4,128,740, assigned to the assignee of the present invention. Consequently, a large number of channels can be made available in a metropolitan area, and the service appears to be identical to the standard telephone. Digital cellular radiotelephone service may be similarly characterized. One major difference, however, is the use of digital voice and data channels which permit the efficient allocation of system resources via any of the well known multiple access schemes, such as, for example, Time Division Multiple Access (TDMA).

In a digital cellular radiotelephone communication system, each cell dedicates one or more communication channels as a Common Control Channel (CCCH). The CCCH is made up of several logical channels which provide different services to the mobile subscriber. The Random Access Channel (RACH) is used for receiving channel access requests from mobile subscriber units. The Access Grant Channel (AGCH) is used to instruct mobile subscriber units, via channel assignment signals, to tune to a particular frequency and time slot where further signalling may take place. The CCCH shares the same frequency and time slot as the Broadcast Control Channel (BCCH) which is used to transmit cell specific parameters to the mobile subscribers tuned to the cell.

In digital cellular radiotelephone systems, there are several access procedures a requesting mobile unit can initiate when attempting to obtain and utilize system resources. These access procedures inform the system which type of operation a requesting mobile unit is attempting to perform. Such operations include but are not limited to, call origination, location reporting, registration and page response.

The typical access procedure is summarized as follows. A mobile unit sends an access request over the RACH, starts a guard timer, and awaits a channel assignment signal or an assignment reject signal from the Base Station System (BSS), informing the mobile whether the access was successful or not. Upon expiration of the guard timer, however, the mobile unit will transmit another access request. This procedure will continue until the mobile unit receives a valid confirmation, or until a maximum number of retries has been attempted, as defined by the BSS broadcast channel.

For security purposes, mobile unit access requests may or may not contain mobile identification information. Access requests, however, do not contain information pertaining to the number of previous requests made by a particular mobile unit. Accordingly, the above described scenario is extremely susceptible to the misallocation of system resources.

If the BSS fails to respond to a mobile unit's initial access request within the mobile unit's guard time, hereinafter referred to as the access request retry interval, or simply the retry interval, the mobile unit will send a new request. Whenever a mobile unit retransmits its access request, there is no means for the BSS to determine whether a received request is a mobile's first or a subsequent attempt. This may result in the BSS processing both requests, thereby activating two channels for the same mobile unit. Since the mobile will respond to the first assignment signal (valid confirmation) received from the BSS, the second will go unanswered thereby resulting in a hung channel.

The occasional channel misallocation is not catastrophic to system performance, since the unused channel will eventually be returned to service. However, the increased occurrence of misallocation, or misallocation during periods of heavy use is a formidable obstacle to the efficient operation of a modern cellular radiotelephone communication system. For example, during periods of heavy use, a BSS typically takes more time to process each incoming access request. Awaiting mobile units, therefore, are more likely to retry access requests because of the slowed BSS response. In this environment, the BSS will likely respond to both request, and activate two channels for a single mobile unit, thereby wasting system resources at a time when resources are already at a premium.

EP-A-0415898 discloses a method in a mobile radio communication system for adapting the system and communication to prevailing traffic and performance requirements. Specifically, this reference reveals how a base site sends an acknowledgment message to give a mobile unit permission to transmit data or to transmit a longer request message, or to deny a mobile unit permission to send speech. Concerning retry messages, this reference teaches sending a retry message from a mobile station when the mobile station does not receive any acknowledgment message from the base station prior to receiving another transmission invitation message.

It would be extremely advantageous therefore to provide a method for reducing the likelihood that more than one channel will be assigned to a single mobile unit making multiple requests.

### Summary of the Invention

Accordingly, the invention provides a method for reducing superfluous channel allocations among a plurality of mobile units in a communication system performing radio channel management, the plurality of mobile units making multiple service requests to communication system base site equipment, said base site equipment receiving a channel request from at least one of the plurality of mobile units, said method characterized by the steps of: determining, at the base site, a communication system processing delay responsive to the time of receiving the channel request; and adjusting system parameters that control a range of mobile unit channel request retry intervals as a function of the processing delay, to reduce the likelihood of more than one channel being assigned to the requesting mobile unit.

### Brief Description of the Drawings

FIG. 1 is a partial block diagram of a communication system according to the present invention;
FIG. 2 and FIG. 5 are flow charts depicting alternate channel allocation methods according to the present invention;
FIG. 3, FIG. 6 and FIG. 7 are flow charts depicting alternate steps involved in managing communication resources according to the present invention; and
FIG. 4 is a flow chart showing yet another method for reducing the likelihood of superfluous channel allocations according to the present invention.

### Detailed Description Of A Preferred Embodiment

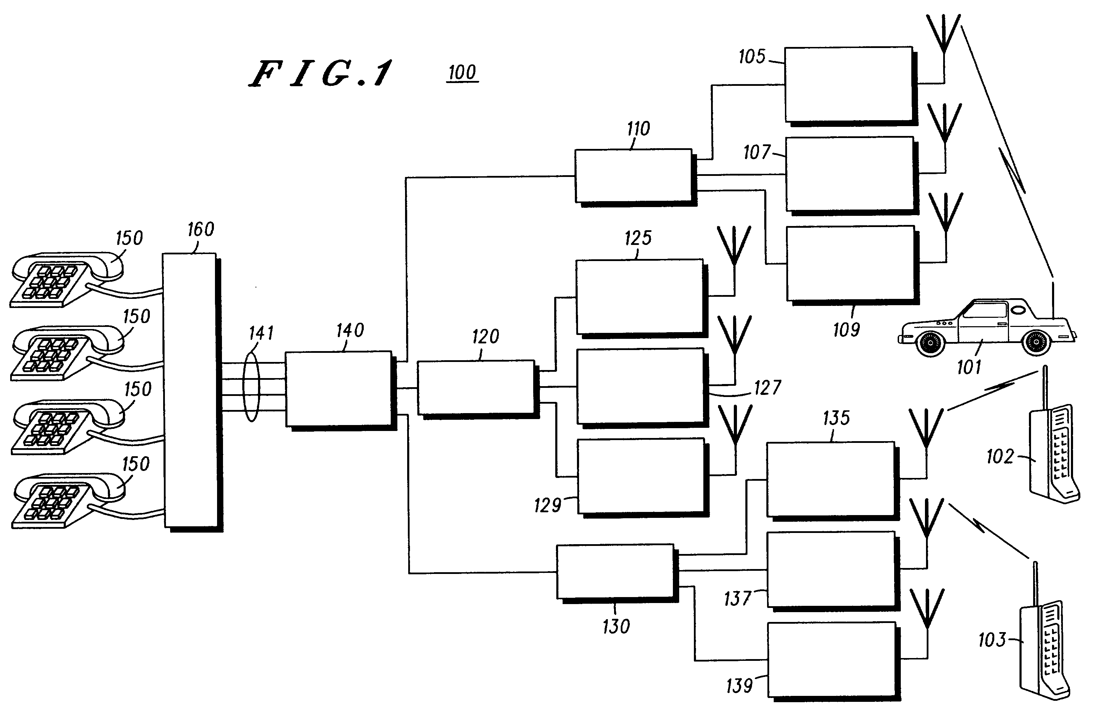

A principal application of the present invention is for a cellular radiotelephone communication system. Referring to Fig 1, there is shown a partial block diagram of a communication system 100 showing the interconnection between the Base Transceiver Stations (BTS) and the mobile units which communicate with the system. Three Base Site Controllers (BSC) 110, 120, and 130 are shown. Each BSC controls one or more BTSs. For example, BSC 110 is shown connected to BTS units 105, 107, and 109. Collectively, a BSC and its accompanying BTSs are referred to as a Base Station System (BSS). Each BSS is responsible for sending and receiving communication signals to and from various mobile units. For the purpose of simplicity, only three BSSs are shown, each consisting of a single BSC with three BTSs. It will be appreciated by those skilled in the art however, that any number of BSSs may be used depending on the size of the area to be covered.

Each of the BSCs 110, 120, and 130 is further connected to the Mobile Switching Center 140 which is also connected to a standard wire line telephone network via lines 141. The lines 141 provide a connection to a plurality of fixed telephones 150 via a telephone central 160. Three mobile units 101, 102 and 103 each containing a transmitter and a receiver for communicating with the BSSs are shown. While only three mobile units are depicted, it will be appreciated by those skilled in the art that the actual number of mobile units serviceable by the communication system 100 is limited only by the number of BSSs, the number of frequencies allocated to the system, and the number of lines allocated to connections with the wire line network.

In operation, incoming messages, like access request, are transmitted by a mobile unit, for example, mobile unit 101. When received by a BSS, the request is processed and a decision is made whether or not to allocate system resources. The BSS then returns outgoing messages, like assignment or assignment reject signals to the mobile unit. Assuming adequate resources are available, the assignment signal transmitted by the BSS will inform the mobile unit 101 what frequency and time slot to tune to in order to find an available communication channel. Thereafter, the access request is is further processed in order to complete the requested operation. During a call origination procedure, for example, the MSC 140 is directed to connect BSC 110 to either the wire line telephone network or to another BSC, such as BSC 130, depending upon whether communication with a fixed or mobile telephone is desired.

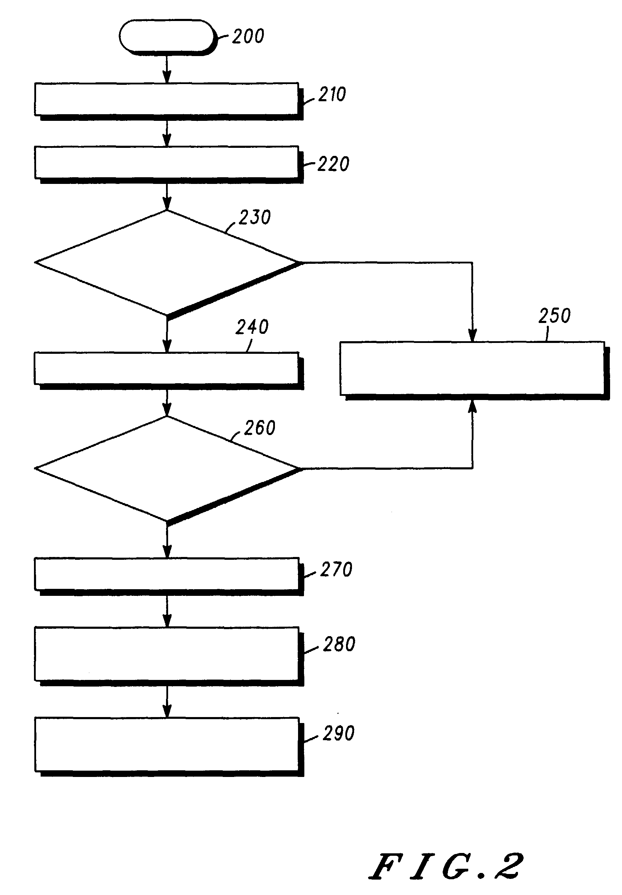

Referring to FIG. 2, a flow chart of a call origination or channel allocation procedure is shown. The flow chart in FIG. 2 is entered at start block 200 whenever an access request is transmitted by one of the plurality of mobile units seeking a communication channel. At block 210 the access request is received by one of the system BSSs. Next at block 220 the access request is processed in order to permit the BSS to identify the requested operation. This information is contained within the pre-defined message structure of the access request. According to the present invention, each access request is transmitted over the RACH, a multi-slot TDMA access channel. In the up link direction (mobile-to-BSS), RACH slots support the following access functions: call origination, location reporting, registration and page response. Allocating specific slots to individual functions by imposing an ordering of the slots will reduce the utilization of the RACH.

Proceeding to decision block 230, after call origination has been identified, a check is made to see if there is an available communication channel which may be allocated to the requesting mobile unit. If not, NO branch is taken to block 250 where a reject message is transmitted, directing the mobile to take alternative actions. Otherwise, YES branch is taken to block 240, where an available communication channel is allocated for the mobile unit. Next, at decision block 260 a check is made to see whether the allocated communication channel can be activated. If not, NO branch is taken back to block 250 where once again, a reject message is transmitted, directing the mobile to take alternative actions. Otherwise, YES branch is taken to block to 270, where the allocated communication channel is activated.

Proceeding to block 280, the BSS next schedules the time when an assignment signal is to be transmitted to the requesting mobile. Finally, at block 290, an assignment signal corresponding to the received access request is transmitted to the mobile unit, informing the mobile unit which frequency and time slot to tune to in order to begin communication.

Since the BSS receives no information regarding the number of attempted requests, it has no means of distinguishing a mobile unit's first access request from those transmitted after expiration of the access timer. While this is not disruptive to overall system performance, there are decided advantages to be realized by providing the BSS with a mobile's access request count. Access request count represents information which is useful for monitoring system performance. In addition, access request count can provide assistance during the dynamic allocation of shared resources. Finally, however, access request count provides crucial information in the struggle to reduce levels of contention; especially during periods of heavy loading when the probability of contending mobiles is at its highest.

It will be appreciated by those skilled in the art that contention pertains to the situation when two or more mobile units request the same system resource at the same time. Since the BSS is incapable of responding to simultaneous access requests, contention will occur, and neither mobile will receive confirmation. At the expiration of their respective access timers, both mobiles will retransmit their respective access requests. In order to assure the access times are not identical, the BSS establishes a range of times for the mobile units serviced by the communication system. This broadcast parameter is transmitted to each mobile unit via a Broadcast Control Channel (BCCH), along with additional parameters which control, for example, the maximum number of times an access request may be transmitted. When formulating an access request, each mobile unit will randomly select a time from within the range as its access time. Random selection of the access time is one means of reducing the likelihood of contending mobiles.

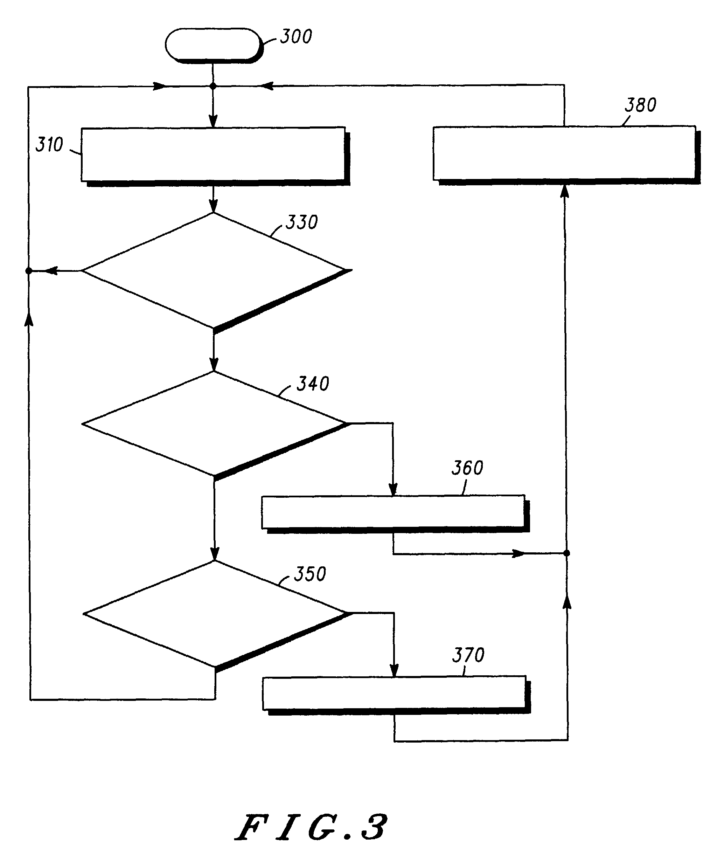

Whenever it is desired to further reduce the likelihood of contention, the flow chart in FIG. 3 is utilized by BSS to alter system resources thereby providing additional protection. Entering the flow chart of FIG. 3 at the start block 300, the number of access requests transmitted by each mobile unit is determined at block 310. Unique to the present invention, each mobile unit tracks the number of access requests attempted and includes this information within each new request. The BSS can accurately determine the access request count for each mobile unit by simply processing the information contained within each received access request.

Proceeding to decision block 330, a check is made to see if a proper amount of time has lapsed since the last resource adjustment. The purpose of this step is to provide a moderate amount of damping in order to assure stable system operation during periods characterized by rapid fluctuation in request traffic. If not, NO branch is taken back to block 310. Otherwise, YES branch is taken to decision block 340 where a check is made to see if the access request count exceeds a threshold level. If so, YES branch is taken to block 360 where the BSS is informed to alter system resources. One such alteration includes increasing the potential range of retry intervals. Increasing the range of retry intervals has the calculated effect of increasing the range of values randomly selected by mobile units as their access times. Thus, by increasing the range of access times as a function of the access request count, the present invention strives to distribute the mobiles across a wider range of access times, thereby reducing the likelihood of contention. Other system resource alterations include but are not limited to adding or deleting communication channels as a function of the access request count for some or all of the requesting mobile units; and denying further accesses as a function of the access request count for some or all of the requesting mobile units.

Next, at block 380, the elapsed time counter checked by decision block 330 is reset. Otherwise, NO branch is taken from block 340 to decision block 350, where a check is made to see if the access request count falls below a threshold level. If so, YES branch is taken to block 370 where the BSS is again informed to alter system resources as a function of the access request count. This may include decreasing the range of potential access times for some or all of the requesting mobile units. While decreasing the range has the calculated effect of shortening access times, it is nonetheless desirable to permit quicker access request retransmission in light of improved system response. Next, at block 380, the elapsed time counter checked by decision block 330 is reset. Otherwise, NO branch is taken back from block 350 to block 310.

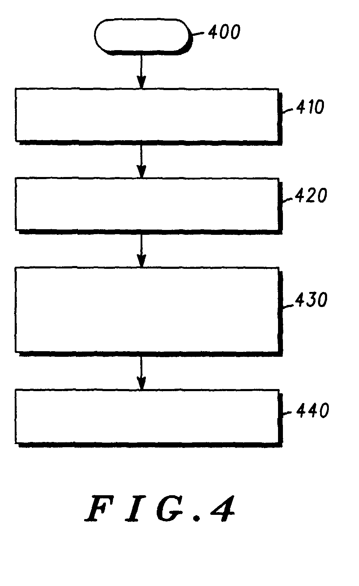

An alternative method for reducing the likelihood of contention is shown in the flow chart of FIG. 4. Entering the flow chart of FIG. 4 at start block 400, the number of access requests transmitted by each mobile is determined at block 410. According to the present invention, each access request includes an access request count, the number of attempted access requests. The BSS can now accurately determine the access request count by simply processing the information found within received access requests. Next, at block 420, the BSS derives timing advance information from each mobile, in order to roughly determine the mobile's distance from the BSS. Timing advance is the round trip propagation time of a call travelling from the base to a mobile unit and back. From this information, the mobile's distance from the base relative to other mobiles using the same cell is estimated.

Proceeding to block 430, the BSS correlates the timing advance information with the access request count. This correlation will indicate to the BSS if there is a problem with the close in mobiles overriding access requests from mobiles at the cell's perimeter. This phenomenon, the near-far problem, does not appear as normal contention. When two mobiles of substantially similar signal strength collide, the BSS is incapable of distinguishing the two signals, therefore neither mobile receives confirmation. In the near-far case, however, the near mobile's signal is sufficiently stronger than the far mobile's signal and is therefore capable of overriding the distant mobile without the BSS recognizing this access as a collision. Consequently, a channel assignment signal will be sent to the near mobile while the far mobile unit receives no response. According to the present invention, however, the BSS is now given a means of identifying the existence of the near-far phenomenon via the correlation of timing advance to the access request count. Such indication arises when distant mobiles consistently have higher access request counts than do near mobiles. Upon recognition of this unique type of contention, system resources are altered in block 440 in order to mitigate this otherwise hard to recognize anomaly.

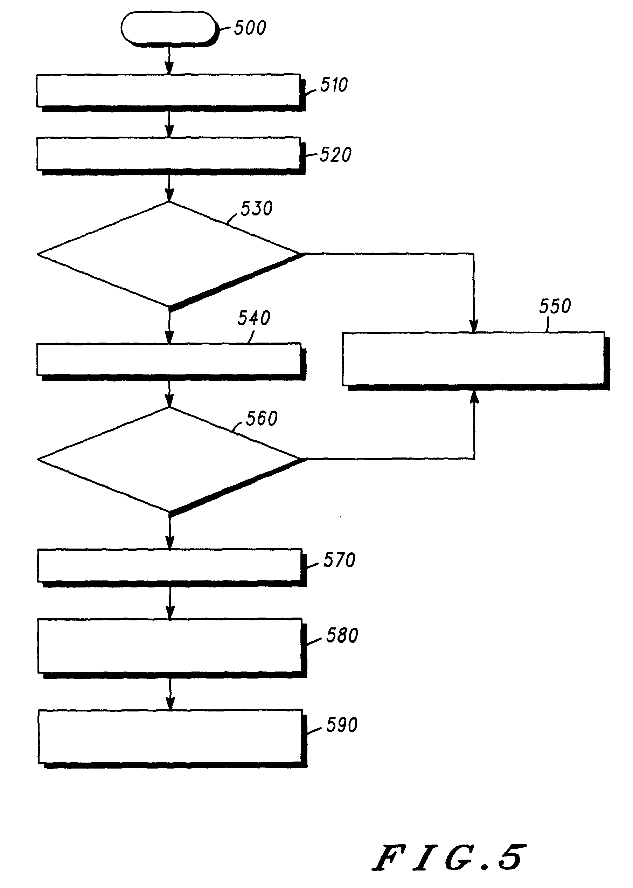

Referring to FIG. 5 a flow chart depicting an alternate channel allocation method according to the present invention is shown. The method described in FIG. 5 operates in accordance with the method of FIG. 2 except that at step 520, the received access request is provided a timing stamp which allows the system to identify the instant that the access request was received. Proceeding to decision block 530, after the access request with accompanying timing stamp arrives at the BSS, a check is made to see if there is an available communication channel which may be allocated to the requesting mobile unit. From this point on, call origination proceeds substantially in accordance with the description of FIG.2, however, at block 580 the BSS performs assignment signal scheduling based on the timing stamp information placed on the access request at block 520. Thus, at block 590, an assignment signal, corresponding to the mobile unit's access request, is transmitted to the mobile unit, informing the mobile which frequency and time slot to tune to in order to begin communication.

As previously discussed, whenever a mobile unit transmits an access request, it starts a guard timer. If the BSS fails to respond to the mobile within this controlled period of time, the mobile unit will be free to transmit yet another request. Since the BSS receives no information regarding access request count, it has no means of correlating a newly received request from those access requests in progress. This will often result in two or more channels being allocated to a single mobile unit.

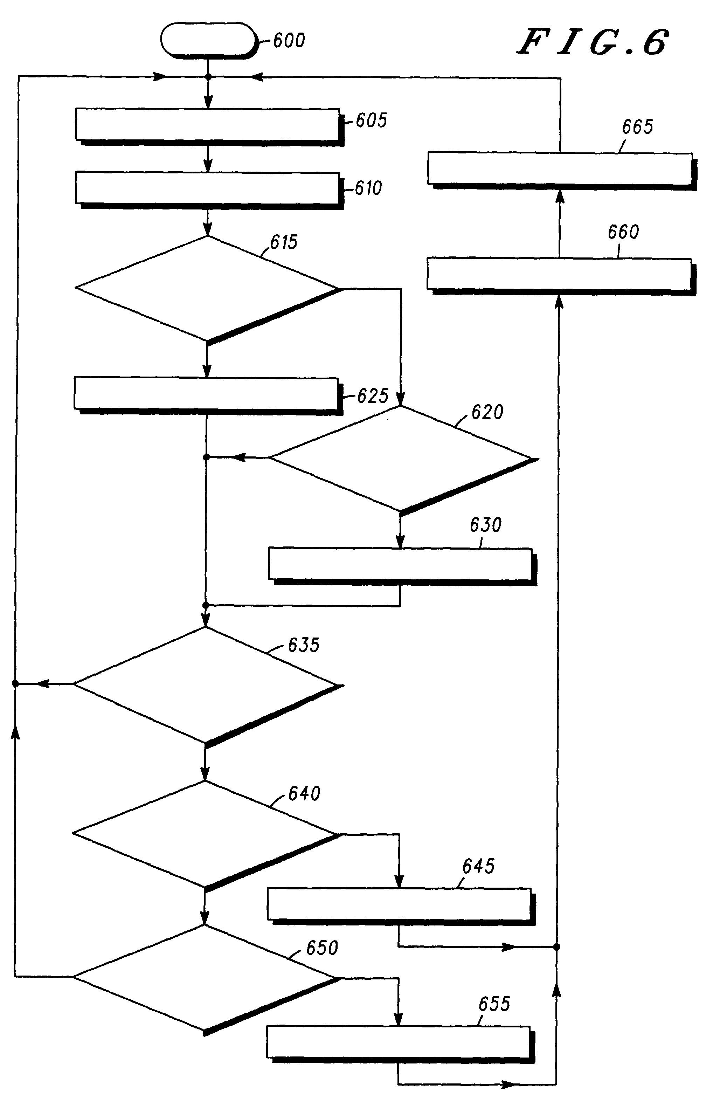

Whenever it is desired to reduce the likelihood of more than one channel being assigned to a single mobile unit, the flow chart in FIG. 6 can be utilized by a BSS for increasing or decreasing the range of possible access request retry intervals, that period of time established by the mobile unit guard timer. In operation, the BSS establishes *N*, the nominal retry interval available for each mobile unit serviced by the communication system. This broadcast parameter is transmitted to each mobile unit via a Broadcast Control Channel (BCCH), along with additional parameters which control for example, the maximum number of times a channel request may be retransmitted by a single mobile unit. When formatting a channel request, each mobile unit will randomly select a value *n+k* as its channel request retry interval, where *n* is a value selected between 0 and *N*-1, and *k* is a constant which attempts to approximate an optimal channel request retry interval for the communication system. According to present system standards *k* is a value selected as either 250ms or 350ms.

Entering the flow chart of FIG. 6 at the start block 600, each channel request is counted at block 605 in order to determine (X), the total number of requests made. Proceeding to block 610, an access request processing delay is determined by establishing the timing difference between the instant an access request is received by a BTS and the instant a BSS schedules transmission of the corresponding assignment signal. It will be appreciated by those skilled in the art that this determination may also be established by taking the average of several such timing difference measurements. Next, at block 615, the communication system processing delay is compared to the retry interval (*N+k*). If this comparison identifies a delay greater than or equal to the retry interval, YES branch is taken to block 625 where counter Y is incremented. Else, NO branch is taken to decision block 620 where a check is made to see if the delay is less than *k*. Assuming it is, the YES branch is taken to block 630 where a counter Z is incremented. Else, NO branch is taken to decision block 635.

At decision block 635, a check is made to see if a proper amount of time has elapsed since the last retry interval adjustment. The purpose of this step is to provide a moderate amount of damping in order to assure stable system operation during periods of rapid processing delay change. If not, No branch is taken back to block 605. Otherwise, YES branch is taken to decision block 640 where a check is made to see if (Y), the number of requests with processing delays greater than the retry interval, exceeds a percentage of the total number of channel requests (X). According to the present example, 10 percent is used as a threshold. If so, YES branch is taken to block 645 where the BSS is informed to increase the value of *N*. An increase in *N* has the calculated effect of increasing the range of values randomly selected by mobile units as their access request retry intervals (*n+k*). Thus, by increasing *N* as a function of the processing delay, the present invention strives to increase mobile unit retry intervals, thereby reducing the likelihood that more than one channel will be assigned to a single mobile unit. Next, at block 660, the elapsed time counter checked by decision block 635 is reset. Then, at block 665, X, Y and Z counters are reset.

Otherwise, NO branch is taken to decision block 650, where a check is made to see if (Z), the number of channel requests with processing delays less than *k*, is greater than a specified percentage of the total number of requests made. According to the present example, 90 percent is used as a threshold. If so, YES branch is taken to block 655 where the BSS is informed to decrease the value of *N*. While a decrease in *N* has the calculated effect of decreasing channel request retry intervals, it is nonetheless desirable to permit quicker channel request retransmissions in light of quicker system response times. Next, at block 660, the elapsed time counter checked by decision block 635 is reset. Then, at block 665, the X, Y and Z counters are reset. Otherwise NO branch is taken back to block 605.

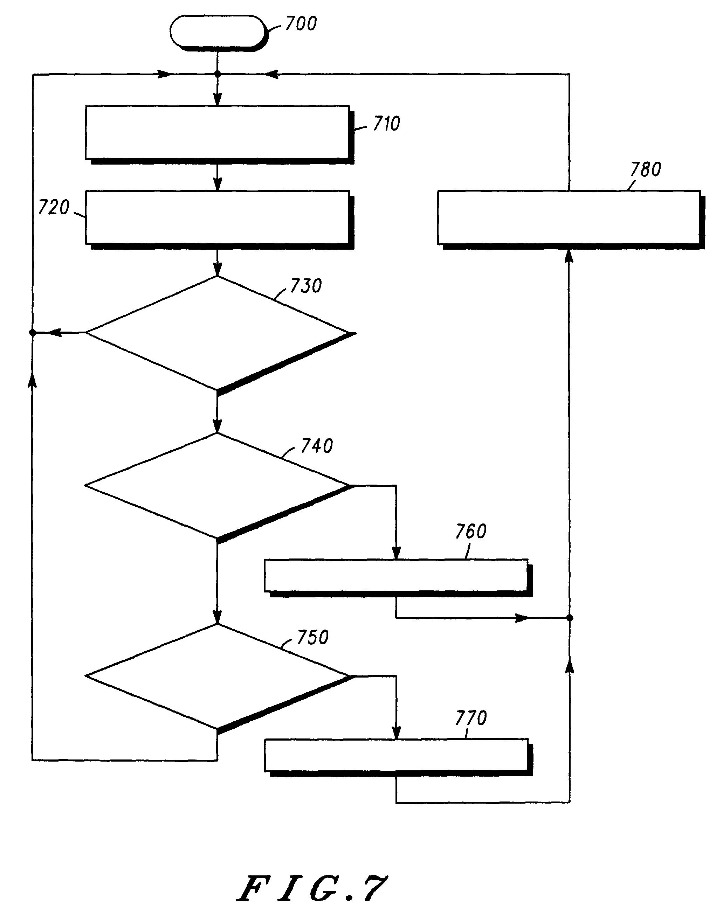

Yet another method for managing communication resources in order to reduce the likelihood that more than one channel will be allocated to a single mobile unit is shown in the flow chart of FIG. 7. Entering the flow chart of FIG. 7 at the start block 700, a level of access request traffic activity across the RACH is determined at block 710 by monitoring a number of received access requests. Next, at block 720, the number of access requests is compared to a predetermined threshold level.

Proceeding to decision block 730, a check is made to see if a proper amount of time has elapsed since the last retry interval adjustment. The purpose of this step is to once again provide a moderate amount of damping in order to assure stable system operation during periods characterized by rapid fluctuation in access request traffic. If not, No branch is taken back to block 710. Otherwise, YES branch is taken to decision block 740 where a check is made to see if the number of access requests exceed the threshold level. If so, YES branch is taken to block 760 where the BSS is informed to increase the value of *N*. An increase in *N* has the calculated effect of increasing the range of values randomly selected by mobile units as their access request retry intervals. Thus, by increasing N as a function of access request traffic, the present invention strives to increase the mobile unit retry interval during periods when the BSS is experiencing heavy loading, thereby reducing the likelihood that more than one channel will be assigned to a single mobile unit. Next, at block 780, the elapsed time counter checked by decision block 730 is reset. Otherwise, NO branch is taken to decision block 750, where a check is made to see if the number of access requests falls below the threshold level. If so, YES branch is taken to block 770 where the BSS is informed to decrease the value of N. While a decrease in N has the calculated effect of decreasing channel request retry intervals, it is nonetheless desirable to permit quicker channel request retransmissions in light of decreased system loading. Next, at block 780, the elapsed time counter checked by decision block 730 is reset. Otherwise, NO branch is taken back to block 710.

In summary, the present invention discloses various means and/or methods for managing communication system resources in order to reduce contention and superfluous channel allocation between a plurality of mobile units, and the communication system servicing those mobile units. While it is suggested that said reduction can be achieved as a function of access request count, system processing delays or levels of request traffic, and thereafter adjusting mobile unit access request retry intervals in response thereto, it will be obvious to those skilled in the art that alternative steps may be performed. For example, N may be adjusted as a function of peak hour or time of day considerations. In addition, N may be adjusted upon the detection of a fault condition. In addition, mobile units may take totally independent action based upon knowledge of access request count, system processing delays and access request traffic. Such actions includes but are not limited to altering mobile unit transmit signal strength levels, selecting other access channels or selecting another serving system.

## Claims

1. A method for reducing superfluous channel allocations among a plurality of mobile units (101, 102, 103) in a communication system (100) performing radio channel management, the plurality of mobile units (101, 102, 103) making multiple service requests to communication system base site equipment (105, 110), said base site equipment (105, 110) receiving a channel request (at 210 or 510) from at least one of the plurality of mobile units (101, 102, 103), said method characterized by the steps of:
determining, at the base site (105), a communication system processing delay (at 610) responsive to the time of receiving the channel request; and
adjusting system parameters that control a range of mobile unit channel request retry intervals (at 645, 655) as a function of the processing delay, to reduce the likelihood of more than one channel being assigned to the requesting mobile unit.

2. The method of claim 1, wherein assignment signal transmissions are scheduled by the base site (105) according to a corresponding channel request's timing stamp.

3. The method of claim 2 wherein assignment signals receive greater priority than assignment reject signals having the same timing stamp.

4. The method of claim 1 wherein the step of determining a communication system processing delay is characterized by the steps of:
providing a timing stamp for the received channel request to identify the instant when the channel request is received by the base site equipment; and
establishing the processing delay, by determining a timing difference between the instant the channel request is received by the base site equipment (105, 110) and the instant the base site (105) schedules an assignment signal for transmission to the requesting mobile unit.

5. The method of claim 1 further characterized by the steps of:
deriving timing advance from a received access request (at 420);
correlating the access request count to the timing advance (at 430); and
altering system resources (at 440) as a function of the correlation,
whereby the likelihood of contention is reduced.

6. The method of claim 1 further characterized by the step of:
altering requesting unit access procedures as a function of access request count.

7. The method of claim 6 wherein the step of altering requesting unit access procedures includes at least one of the following:
altering requesting unit transmit signal strength levels;
selecting another requesting unit access channel; and
selecting another requesting unit serving system.

8. The method of claim 1 further characterized by the steps of:
allocating a channel to support mobile unit communication (at 240 or 540);
activating the allocated channel (at 270 or 570);
scheduling transmission of an assignment signal to a requesting mobile unit (at 280 or 580); and
transmitting an assignment signal to the requesting mobile unit upon the successful allocation and activation of a communication channel (at 290 or 590).

9. The method of claim 1 wherein the step of determining a processing delay is further characterized by the steps of:
providing a timing stamp for the received access request to identify the instant when the access request is received (at 520); and
establishing the processing delay, by determining a timing difference between the instant the access request is received and the instant the assignment signal is scheduled for transmission( at 610).

10. The method of claim 1 wherein the step of adjusting a range of access request retry intervals is further characterized by the steps of:
monitoring processing delays (at 610);
comparing the processing delay to predetermined values (at 615);
determining a period of time since a last retry interval adjustment (at 635); and
performing a retry interval adjustment only after expiration of a predetermined period of time by:
altering system parameters that increase the range of retry intervals as the processing delay exceeds a predetermined value (at 645); and
altering system parameters that decrease the range of retry intervals as the processing delay falls below a predetermined value (at 655).

## Patentansprüche

1. Verfahren, um überflüssige Kanalzuweisungen unter einer Mehrzahl von Mobileinheiten (101, 102, 103) in einen Kommunikationssystem (100), das eine Funkkanalverwaltung durchführt, zu reduzieren, wobei die Mehrzahl vom Mobileinheiten (101, 102, 103) mehrfache Service-Anforderungen an eine Kommunikationssystem-Basisstationseinrichtung (105, 110) abgibt, wobei die Basisstationseinrichtung (105, 110) eine Kanalanforderung (bei 210 oder 510) von wenigstens einer der Mehrzahl von Mobileinheiten (101, 102, 103) empfängt, wobei das Verfahren gekennzeichnet ist durch die Schritte:
Bestimmen in der Basisstation (105) einer Kommunikationssystem-Verarbeitungsverzögerung (bei 610) reagierend auf die Empfangszeit der Kanalanforderung und
Justieren von Systemparametern, die einen Bereich von Kanalanforderungs-Wiederholungsintervallen (bei 645, 655) der Mobileinheiten steuern, als eine Funktion der Verarbeitungsverzögerung, um die Wahrscheinlichkeit zu verringern, daß der anfordernden Mobileinheit mehr als ein Kanal zugewiesen wird.

2. Verfahren nach Anspruch 1, bei dem Zuweisungssignalsendungen durch die Basissation (105) nach Maßgabe eines entsprechenden Zeitstempels der Kanalanforderung geplant werden.

3. Verfahren nach Anspruch 2, bei dem Zuweisungssignale größere Priorität erhalten als Zuweisungsrückweisungssignale mit demselben Zeitstempel.

4. Verfahren nach Anspruch 1, bei dem der Schritt zum Bestimmen einer Kommunikationssystem-Verarbeitungsverzögerung gekennzeichnet ist durch die Schritte:
Bereitstellen eines Zeitstempels für die empfangene Kanalanforderung, um den Augenblick zu identifizieren, wann die Kanalanforderung durch die Basisstationseinrichtung empfangen wird, und
Festsetzen der Verarbeitungsverzögerung durch Bestimmen einer Zeitdifferenz zwischen dem Augenblick, wo die Kanalanforderung durch die Basisstationseinrichtung (105, 110) empfangen wird, und dem Augenblick, wo die Basisstation (105) ein Zuweisungssignal zum Senden an die anfordernde Mobileinheit plant.

5. Verfahren nach Anspruch 1, weiter gekennzeichnet durch die Schritte:
Gewinnen der Zeitvoreilung von einer empfangenen Zugangsanforderung (bei 420);
Korrelieren der Zugangsanforderungszählung mit der Zeitvoreilung (bei 430) und
Ändern von Systembetriebsmitteln (bei 440) als eine Funktion der Korrelation, wodurch die Wahrscheinlichkeit einer Streitigkeit verringert wird.

6. Verfahren nach Anspruch 1, weiter gekennzeichnet durch den Schritt:
Ändern der Zugangsprozeduren anfordernder Einheiten als eine Funktion der Zugangsanforderungszählung.

7. Verfahren nach Anspruch 6, bei dem der Schritt zum Ändern der Zugangsprozeduren anfordernder Einheiten wenigstens einen der folgenden Schritte umfaßt:
Ändern der Sendesignalstärkepegel der anfordernden Einheiten;
Wählen eines anderen Zugangskanals der anfordernden Einheiten;
Wählen eines anderen Versorgungssystems der anfordernden Einheiten;

8. Verfahren nach Anspruch 1, weiter gekennzeichnet durch die Schritte:
Zuweisen eines Kanals, der die Kommunikation der Mobileinheit unterstützt (bei 240 oder 540);
Aktivieren des zugewiesenen Kanals (bei 270 oder 570);
Planen des Sendens eines Zuweisungssignals an eine anfordernde Mobileinheit (bei 280 oder 580) und
Senden eines Zuweisungssignals an die anfordernde Mobileinheit nach der erfolgreichen Zuweisung und Aktivierung eines Kommunikationskanals (bei 290 oder 590).

9. Verfahren nach Anspruch 1, bei dem der Schritt zum Bestimmen einer Verarbeitungsverzögerung weiter gekennzeichnet ist durch die Schritte:
Bereitstellen eines Zeitstempels für die empfangene Zugangsanforderung, um den Augenblick zu identifizieren, wann die Zugangsanforderung empfangen wird (bei 520), und
Festsetzen der Verarbeitungsverzögerung durch Bestimmen einer Zeitdifferenz zwischen dem Augenblick, wo die Zugangsanforderung empfangen wird, und dem Augenblick, wo das Zuweisungssignal zum Senden geplant wird (bei 610).

10. Verfahren nach Anspruch 1, bei dem der Schritt zum Justieren eines Bereiches von Zugangsanforderungs-Wiederholungsintervallen weiter gekennzeichnet ist durch die Schritte:
Überwachen der Verarbeitungsverzögerungen (bei 610);
Vergleichen der Verarbeitungsverzögerung mit vorbestimmten Werten (bei 615);
Bestimmen einer Zeitdauer seit einer letzten Wiederholungsintervalljustierung (bei 635) und
Durchführen einer Wiederholungsintervalljustierung nur nach Ablauf einer vorbestimmten Zeitdauer durch:
Ändern von Systemparametern, die den Bereich von Wiederholungsintervallen vergrößern, wenn die Verarbeitungsverzögerung einen vorbestimmten Wert übersteigt (bei 645), und
Ändern von Systemparametern, die den Bereich von Wiederholungsintervallen verkleinern, wenn die Verarbeitungsverzögerung unter einen vorbestimmten Wert fällt (bei 655).

## Revendications

1. Procédé de réduction des allocations superflues de canal parmi une pluralité d'unités mobiles (101, 102, 103) dans un système de communication (100) effectuant une gestion de canal radio, la pluralité d'unités mobiles (101, 102, 103) effectuant de multiples demandes de service vers un équipement de site de base du système de communication (105, 110), ledit équipement de site de base (105, 110) recevant une demande de canal (en 210 ou 510) à partir d'au moins une unité de la pluralité d'unités mobiles (101, 102, 103), procédé caractérisé par les étapes suivantes :
- la détermination sur le site de base (105) d'un retard de traitement de système de communication (en 610) selon le temps de réception de la demande de canal; et
- le réglage des paramètres du système commandant une gamme d'intervalles de nouvel essai de demande de canal d'unité mobile (en 645, 655) en fonction du retard de traitement afin de réduire la probabilité d'une assignation de plus d'un canal à l'unité mobile demanderesse.

2. Procédé selon la revendication 1, selon lequel les transmissions de signal d'assignation sont planifiées par le site de base (105) selon un marquage correspondant dans le temps de demande de canal correspondant.

3. Procédé selon la revendication 2, selon lequel les signaux d'assignation reçoivent une plus grande priorité que les signaux de rejet d'assignation ayant le même marquage dans le temps.

4. Procédé selon la revendication 1, selon lequel l'étape de détermination d'un retard de traitement d'un système de communication comprend les étapes suivantes:
- la prévision d'un marquage dans le temps pour la demande de canal reçue afin d'identifier l'instant où la demande de canal est reçue par l'équipement de site de base; et
- l'établissement du retard de traitement par la détermination d'une différence de calage dans le temps entre l'instant où la demande de canal est reçue par l'équipement de site de base (105, 110) et l'instant où le site de base (105) planifie un signal d'assignation pour une transmission vers l'unité mobile demanderesse.

5. Procédé selon la revendication 1, caractérisé, de plus, par les étapes suivantes :
- la déduction d'une avance dans le temps à partir d'une demande d'accès reçue (en 420);
- la corrélation du décompte de demande d'accès avec l'avance dans le temps (en 430); et
- la modification des ressources du système (en 440) en fonction de la corrélation, la probabilité de conflits étant ainsi réduite.

6. Procédé selon la revendication 1, caractérisé, de plus, par une étape de modification des procédures d'accès d'unité demanderesse en fonction du décompte de demande d'accès.

7. Procédé selon la revendication 6, selon lequel l'étape de modification des procédures d'accès d'unité demanderesse comprend au moins une des étapes suivantes :
- la modification des niveaux d'intensité de signal transmis par l'unité demanderesse;
- la sélection d'un autre canal d'accès d'unité demanderesse; et
- la sélection d'un autre système serveur d'unité demanderesse.

8. Procédé selon la revendication 1, caractérisé, de plus, par les étapes suivantes :
- l'allocation d'un canal pour supporter une communication d'unité mobile (en 240 ou 540);
- l'activation du canal alloué (en 270 ou 570);
- la planification de la transmission d'un signal d'assignation vers une unité mobile demanderesse (en 280 ou 580); et
- la transmission d'un signal d'assignation vers l'unité mobile demanderesse lors de l'allocation réussie et l'activation d'un canal de communication (en 290 ou 590).

9. Procédé selon la revendication 1, selon lequel l'étape de détermination d'un retard de traitement comprend, de plus, les étapes suivantes :
- la prévision d'un marquage dans le temps pour la demande d'accès reçue afin d'identifier l'instant où la demande d'accès est reçue (en 520); et
- l'établissement du retard de traitement en déterminant une différence de calage dans le temps entre l'instant de réception de la demande d'accès et l'instant où le signal d'assignation est prévu pour la transmission (en 610).

10. Procédé selon la revendication 1, selon lequel l'étape de réglage d'une gamme d'intervalles de nouvel essai de demande d'accès comprend, de plus, les étapes suivantes :
- le contrôle des retards de traitement (en 610);
- la comparaison du retard de traitement avec des valeurs prédéterminées (en 615);
- la détermination d'une période de temps depuis le dernier réglage d'intervalle de nouvel essai (en 635); et
- la réalisation d'un réglage d'intervalle de nouvel essai seulement après la fin d'une période de temps prédéterminée par :
- modification des paramètres du système augmentant la gamme des intervalles de nouvel essai tandis que le retard de traitement dépasse une valeur prédéterminée (en 645); et
- modification des paramètres du système diminuant la gamme des intervalles de nouvel essai tandis que le retard de traitement chute en dessous d'une valeur prédéterminée (en 655).
